## Europäisches Patentamt
## European Patent Office
## Office européen des brevets

(19)

(11) Numéro de publication: **0 182 698**

**B1**

(12) **FASCICULE DE BREVET EUROPÉEN**

(45) Date de publication du fascicule du brevet:
04.01.89

(51) Int. Cl.⁴: **G 02 B 27/00,** G 02 B 27/28

(21) Numéro de dépôt: **85402111.0**

(22) Date de dépôt: **04.11.85**

(54) **Système de visualisation comprenant un écran émissif transparent.**

(30) Priorité: **06.11.84 FR 8416874**

(43) Date de publication de la demande:
**28.05.86 Bulletin 86/22**

(45) Mention de la délivrance du brevet:
**04.01.89 Bulletin 89/1**

(84) Etats contractants désignés:
**BE CH DE GB IT LI SE**

(56) Documents cité:
**EP-A-0 087 998**
**US-A-4 202 601**
**US-A-4 447 128**

**IBM TECHNICAL DISCLOSURE BULLETIN, vol. 12, no. 5, octobre 1969, page 692, New York, US; T.L. LEMKE: "Intensity control system using crossed linear polarizers"**

(73) Titulaire: **THOMSON- CSF, 173, Boulevard Haussmann, F-75379 Paris Cédex 08 (FR)**

(72) Inventeur: **Vernay, Michel, THOMSON- CSF SCPI 173, bld Haussmann, F-75379 Paris Cedex 08 (FR)**

(74) Mandataire: **Lincot, Georges, THOMSON- CSF SCPI 19, avenue de Messine, F-75008 Paris (FR)**

## Description

La présente invention se rapporte aux systèmes de visualisation comprenant un écran émissif transparent qui permet de visualiser simultanément les informations affichées par cet écran et celles vues par transparence à travers celui-ci.

Il est connu depuis longtemps d'utiliser dans les avions des collimateurs qui permettent de former par réflexion sur un miroir semi-transparent un réticule de visée qui se superpose à la scène, une cible par exemple, visible à travers la verrière de l'habitacle. La luminosité d'un tel collimateur peut être réglée pour que le réticule ne soit pas noyé dans la lumière extérieure, celle du soleil vu de face par exemple. Par contre la réflexion sur des miroirs introduit une polarisation au moins partielle qui empêche d'utiliser de manière pratique des filtres polarisants pour atténuer la lumière extérieure US-A-4 447 128.

On a proposé depuis peu d'utiliser pour faire un collimateur, et de manière général tout dispositif de visualisation dit "tête-haute", un écran émissif transparent qui peut être mis directement sur le trajet des rayons lumineux extérieurs. On simplifie aussi grandement le matériel. Toutefois la luminosité d'un tel écran est trop faible par rapport à celle du soleil, mais il n'y a cependant pas de phénomene de polarisation intrinsèque à un tel dispositif.

Pour pouvoir observer simultanément les informations affichées sur un tel écran émissif transparent, et une scène extérieure observée à travers celui-ci, l'invention propose d'atténuer de manière réglable la luminosité de cette scène extérieure sans atténuer celle de l'écran en utilisant les caractérictiques de la revendication 1, c'est-à-dire particulièrement deux polarisés croisés d'un angle variable et dont l'un au moins est placé entre la scène extérieure et l'écran:

D'autres particularités et avantages de l'invention apparaîtront clairement dans la description suivante, présentée à titre d'exemple non limitatif et faite en regard des figures annexées qui représentent

- la figure 1, une vue schématique d'un pilote regardant à travers un dispositif selon l'invention un avion situé entre le soleil et lui;
- la figure 2, une vue schématique d'une variante du dispositif de la figure 1.

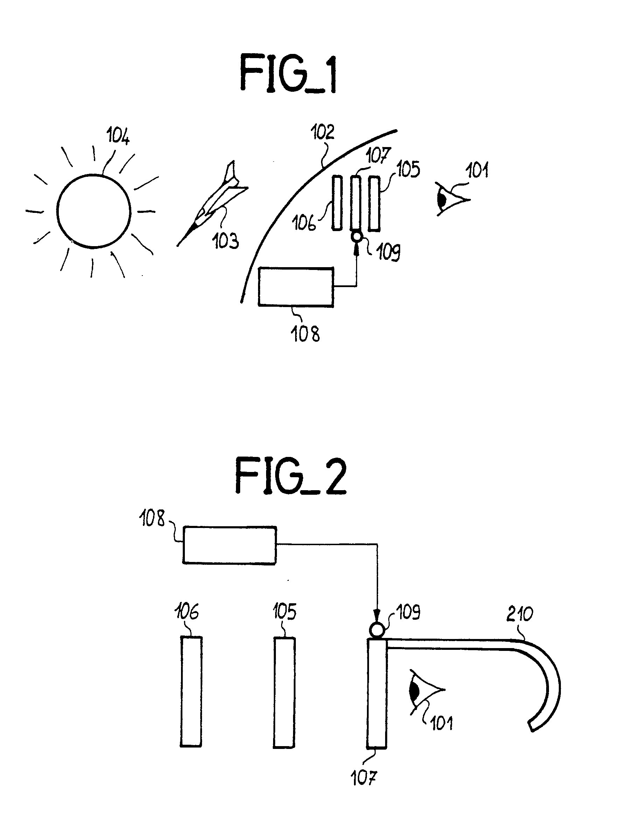

Sur la figure 1, le pilote 101 d'un avion observe à travers la verrière 102 de l'habitacle un autre avion 103 situé entre le soleil 104 et lui-même. Un écran de visualisation 105, du type transparent et émissif, lui permet de voir en même temps des indications concernant l'avion 103, des données d'identification et de tir par exemple.

Pour atténuer la lumière du soleil, on a placé entre la verrière 102 et l'écran 105 deux filtres polarisants 106 et 107 dont l'un (106) est fixe et l'autre (107) peut tourner dans son plan pour croiser plus ou moins sa direction de polarisation avec celle du polariseur fixe.

Par un effet bien connu, la lumière qui traverse l'ensemble de ces deux polariseurs est plus ou moins atténuée selon l'angle que font entre elles les directions de polarisation de ces deux polariseurs. On peut donc ajuster la luminosité de la scène extérieure pour qu'elle ne noie pas celle de l'écran 105 et que les indications de celui-ci restent visibles pour le pilote 101, en superposition sur l'image de l'avion 103.

Ce réglage se fait de manière automatique à l'aide d'une cellule photo-électrique 108 qui commande un moteur 109, lequel entraîne en rotation par un jeu d'engrenages l'écran 107.

Les positions relations de l'écran de visualisation et des polariseurs peuvent changer, l'essentiel étant que l'un au moins de ceux-ci soit entre l'écran et la scène à observer pour ne pas assombrir également l'écran. En particulier le polariseur 107 peut être fixe et le polariseur 106 orientable, et le polariseur 107 peut être situé entre l'écran 105 et le pilote 101.

Une variante intéressante consiste à utiliser des lunettes 210 portées par le pilote 101 et dont les verres 107 sont polarisants. Un micromoteur 109 fixé sur la monture des lunettes commande la rotation de ces verres sous le contrôle d'une cellule 108. Ceci permet de dégager en partie l'emplacement où se trouve l'écran 105.

L'invention n'est pas limitée au cas d'un écran d'affichage dans un avion. Elle s'étend au contraire à tous les instruments qui comportent des moyens d'affichage insérés dans un chemin optique, et en particulier aux réticules des viseurs, télémètres, binoculaires et jumelles. Ces derniers, qui ont deux chemins optiques, peuvent bénéficier de la différenciation de l'atténuation.

## Revendications

1. Système de visualisation du type comprenant un écran de visualisation émissif transparent (105) permettant d'afficher des informations lumineuses et placé sur un chemin optique destiné à transporter l'image d'une scène extérieure (103), caractérisé en ce qu'il comprend en outre, au moins un premier filtre polariseur (106) placé sur ce même chemin optique avant ledit écran (105), au moins un deuxième filtre polariseur (107) placé sur le chemin optique, et des moyens (109) pour croiser de manière variable les filtres polariseurs entre eux de manière à obscurcir l'image de la scène extérieure (203) sans obscurcir les informations affichées sur l'écran, ces moyens (109) pour croiser les filtres comprenant une cellule photoélectrique (108) pour mesurer la luminosité de la scène extérieure et commander un moteur permettant de faire tourner l'un des filtres polariseur (107).

2. Système selon la revendication 1, caractérisé en ce qu'il comprend en outre une monture de lunettes (210) sur laquelle est fixé le deuxième filtre polariseur (107).

3. Système selon la revendication 2, caractérisé en ce qu'il comprend deux deuxièmes filtres polariseurs (207) distincts fixés sur la monture de lunettes (210) respectivement aux emplacements prévus pour les deux verres, et que les orientations de chacun de ces filtres sont indépendantes.

4. Système selon la revendication 1, caractérisé en ce que le chemin optique traverse au moins un objectif muni d'un filtre polariseur, puis un ecran émissif transparent jouant le rôle d'un réticule, puis au moins un oculaire muni d'un deuxième filtre et comportant des moyens pour croiser de manière variable les filtres polariseurs entre eux de manière à obscurcir l'image de la scène extérieure sans obscurcir les informations affichées sur l'écran.

## Patentansprüche

1. Anzeigesystem vom Typ mit einem durchsichtigen emittierenden Anzeigebildschirm (105), welcher das Anzeigen von Lichtinformationen ermöglicht und auf einem optischen Weg angeordnet ist, der dazu bestimmt ist, das Bild einer äußeren Szene (103) zu transportieren, dadurch gekennzeichnet, daß es ferner wenigstens ein erstes Polarisationsfilter (106) umfaßt, das vor dem genannten Bildschirm (105) auf diesem selben optischen Weg angeordnet ist, wenigstens ein zweites Polarisationsfilter (107), das auf den optischem Weg angeordnet ist, sowie Mittel (109) umfaßt, damit die Polarisationsfilter miteinander variabel gekreuzt werden, so daß das Bild der äußeren Szene (203) verdunkelt wird, ohne daß die auf dem Bildschirm angezeigten Informationen verdunkelt werden, wobei diese Mittel (109) zum Kreuzen der Filter eine photoelektrische Zelle (108) umfassen, um die Leuchtstärke der äußeren Szene zu messen und einen Motor zu steuern, welcher es ermöglicht, daß eines der Polarisationsfilter (107) sich dreht.

2. System nach Anspruch 1, dadurch gekennzeichnet, daß es ferner eine Linsenhalterung (210) umfaßt, auf welcher das zweite Polarisationsfilter (107) befestigt ist.

3. System nach Anspruch 2, dadurch gekennzeichnet, daß es zwei zweite getrennte Polarisationsfilter (207) umfaßt, welche auf der Linsenhalterung (210) jeweils an den für die beiden Gläser vorgesehenen Stellen befestigt werden, und daß die Orientierungen jedes dieser Filter unabhängig sind.

4. System nach Anspruch 1, dadurch gekennzeichnet, daß der optische Weg wenigstens ein mit einem Polarisationsfilter versehenes Objektiv durchquert, dann einen die Rolle eines Fadenkreuzes spielenden durchsichtigen emittierenden Bildschirm, dann wenigstens ein mit einem zweiten Filter versehenes Okular durchquert, das Mittel umfaßt, um die Polarisationsfilter miteinander variabel zu kreuzen, so daß das Bild der äußeren Szene verdunkelt wird, ohne daß die auf dem Bildschirm angezeigten Informationen verdunkelt werden.

## Claims

1. A visualizing system of the type comprising an emitting transparent viewing screen (105) making it possible to indicate light information and placed on an optical path intended to transfer the image of an exterior scene (103), characterized in that it comprises furthermore at least a first polarizing filter (106) located on this said optical path in front of said screen (105), at least a second polarizing filter (107) located on the optical path, and means (109) in order to variably cross the polarizing filters in such a manner as to obscure the image of the exterior scene (203) without obscuring the information indicated on the screen, said means (109) for crossing the filters comprising a photoelectric cell (108) to measure the brightness of the exterior scene and to control a motor making it possible to turn one of the polarizing filters (107).

2. The system as claimed in claim 1, characterized in that it furthermore comprises a spectacle mounting means (210) on which the second polarizing filter (107) is secured.

3. The system as claimed in claim 2, characterized in that it comprises two distinct polarizing filters (207) secured to the spectacle mounting means (210) respectively on seats provided for the two glasses, and in that the orientation of each of these filters is independent.

4. The system as claimed in claim 1, characterized in that the optical path extends through at least one objective provided with a polarizing filter, then an emitting transparent screen playing the role of a reticule, then at least one eye-piece provided with a second filter and comprising means to variably cross over the polarizing filters in such a manner as to obscure the image of the exterior scene without obscuring the information indicated on the screen, frequency comprise tub emptying phases for the machine and/or rotation acceleration phases for the drum thereof, more especially during spinning.

# FIG_1

# FIG_2